# EUROPEAN PATENT APPLICATION

(11) **EP 4 580 275 A1**
(43) Date of publication of application: **02.07.2025**
(21) Application number: 22956032.1
(22) Date of filing: 24.08.2022
(51) Int. Cl.: H04W 72/02

(54) **HARQ ATTRIBUTE-BASED CARRIER SELECTION OR RESELECTION METHOD, APPARATUS, AND DEVICE**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/114636
(87) International publication number: WO 2024/040484

(57) **Abstract**

Disclosed in embodiments of the present invention are a hybrid automatic repeat request (HARQ) attribute-based carrier selection or reselection method, an apparatus, a device, and a storage medium, capable of being applied to a communication system. The method comprises: triggering carrier selection or reselection; determining an HARQ attribute of a sidelink logical channel on which data to be transmitted is present, wherein the HARQ attribute of the sidelink logical channel is configured by a network device; and selecting or reselecting a first target carrier according to the HARQ attribute. By implementing the method of the present disclosure, an HARQ attribute of a sidelink logical channel on which data to be transmitted is present can affect carrier selection or reselection, so that a selected or reselected carrier can effectively support the HARQ attribute of said data.

## Description

### FIELD

The present disclosure relates to the field of communication technologies, and in particular to a carrier selection or reselection method based on an HARQ attribute, an apparatus and a device.

### BACKGROUND

In order to support a direct communication between a terminal device (User Equipment, UE) and another terminal device, a sidelink (sidelink, SL) communication mode is introduced. The interface between the UEs is PC-5.

According to a corresponding relationship between a transmission UE and a reception UE, three transmission modes are supported on a sidelink (SL): unicast, multicast and broadcast. The transmission UE transmits sidelink control information (Sidelink Control Information, SCI) on a physical sidelink control channel (Physical Sidelink Control Channel, PSCCH), and transmits a second stage SCI on a physical sidelink shared channel (Physical Sidelink Shared Channel, PSSCH), in which a resource location of transmission data and source and target identifiers, etc., are carried. In a case of a hybrid automatic repeat request (Hybrid Automatic Repeat reQuest, HARQ) enabled (HARQ-enabled) data packet, the reception UE performs HARQ-ACK feedback for a PSSCH on a physical sidelink feedback channel (Physical Sidelink Feedback Channel, PSFCH). The PSFCH resource is configured based on a granularity of a resource pool and is configured by a network device. Some resource pools may be configured with PSFCH resources, while other resource pools may not be configured with PSFCH resources. A resource pool that is not configured with PSFCH resources cannot be used to transmit HARQ-enabled data packets.

The new radio (New Radio, NR) sidelink supports HARQ feedback, and hence, it is supported that a network device configures an HARQ attribute for a sidelink logical channel (Sidelink Logical Channel, SL-LCH). HARQ attributes include HARQ-enabled (HARQ enabled) and HARQ-disabled (HARQ disabled). For an HARQ-enabled logical channel (Logical Channel, LCH), during a link control protocol (Link Control Protocol, LCP) negotiation process, it can only be multiplexed with other HARQ-enabled LCHs belonging to the same target address. For an HARQ-disabled LCH, during a LCP negotiation process, it can only be multiplexed with other HARQ-disabled LCHs belonging to the same target address. For an HARQ-enabled data packet, HARQ feedback needs to be supported. The HARQ feedback of the NR sidelink is carried by a PSFCH.

In the related technologies, the LCH of the NR sidelink supports an HARQ attribute. However, in a case that the terminal device (UE) selects or reselects a carrier, the selected or reselected carrier may not support the HARQ attribute of data to be transmitted.

### SUMMARY

The embodiments of the present disclosure provide a carrier selection or reselection method based on an HARQ attribute, an apparatus, a device, a chip system, a storage medium, a computer program and a computer program product, which may be applied in the field of communication technologies. By influencing carrier selection or reselection by an HARQ attribute of a sidelink logical channel with data to be transmitted, a selected or reselected carrier can effectively support the HARQ attribute of the data to be transmitted.

In a first aspect, embodiments of the present disclosure provide a carrier selection or reselection method based on an HARQ attribute, which is performed by a terminal device. The method includes: triggering carrier selection or reselection; determining a hybrid automatic repeat request (HARQ) attribute of a sidelink logical channel on which data is to be transmitted, where the HARQ attribute of the sidelink logical channel is configured by a network device; and selecting or reselecting a first target carrier based on the HARQ attribute.

In an implementation, selecting or reselecting the first target carrier based on the HARQ attribute includes:
in a case that the HARQ attribute of at least one sidelink logical channel is HARQ-enabled, selecting or reselecting a first carrier as the first target carrier;
where at least one resource pool of the first carrier is configured with a physical sidelink feedback channel (PSFCH) resource.

In an implementation, the at least one resource pool does not include a resource pool configured specifically for transmitting discovery signals or dedicated to discovery signals.

In an implementation, selecting or reselecting the first target carrier based on the HARQ attribute includes:
in a case that HARQ attributes of all sidelink logical channels are HARQ-disabled, selecting or reselecting a second carrier as the first target carrier;
where the second carrier is a carrier that meets a requirement for the carrier selection or reselection.

In an implementation, the method further includes:
in a case that it is determined that only first information is to be transmitted, selecting or reselecting a third carrier as the first target carrier;
where the third carrier is a carrier that meets a requirement for the carrier selection or reselection.

In an implementation, the first information includes at least one of:
a sidelink channel state information (SL CSI) report; and/or
a sidelink inter-UE coordination (SL IUC) report; and/or
a sidelink discontinuous reception (SL DRX) command.

In a second aspect, embodiments of the present disclosure provide another carrier selection or reselection method based on an HARQ attribute, which is executed by a network device. The method includes: configuring a hybrid automatic repeat request (HARQ) attribute of a sidelink logical channel for a terminal device.

In an implementation, configuring the HARQ attribute of the sidelink logical channel for the terminal device includes:
configuring the HARQ attribute of at least one sidelink logical channel to be HARQ-enabled.

In an implementation, the method further includes:
in a case that the HARQ attribute of the at least one sidelink logical channel is configured as HARQ-enabled, configuring a PSFCH resource for at least one resource pool of at least one carrier.

In an implementation, the method further includes:
in a case that the HARQ attribute of the at least one sidelink logical channel is configured as HARQ-enabled, configuring PSFCH resources for all resource pools of all carriers.

In an implementation, the method further includes:
in a case that the HARQ attribute of the at least one sidelink logical channel is configured as HARQ-enabled, configuring a PSFCH resource for at least one resource pool of each carrier in all carriers.

In an implementation, the method further includes:
in a case that the HARQ attribute of the at least one sidelink logical channel is configured as HARQ-enabled, configuring PSFCH resources for all resource pools of at least one carrier.

In an implementation, the resource pool does not include a resource pool configured specifically for transmitting discovery signals or dedicated to discovery signals.

In a third aspect, embodiments of the present disclosure provide a communication apparatus, which has some or all of functions of a terminal device implementing the method described in the first aspect. For example, functions of the communication apparatus may include functions of some or all of the embodiments in the present disclosure, or may include functions of implementing any one of the embodiments in the present disclosure alone. The functions may be implemented by hardware, or by hardware executing corresponding software. The hardware or software includes one or more units or modules corresponding to the above functions.

Optionally, in an embodiment of the present disclosure, a structure of the communication apparatus may include a reception and transmission module and a processing module, and the processing module is configured to support the communication apparatus to execute corresponding functions in the above method. The reception and transmission module is configured to support communication between the communication apparatus and other device. The communication apparatus may further include a storage module, and the storage module is configured to couple with the reception and transmission module and the processing module, and store a computer program and data needed for the communication apparatus.

As an example, the processing module may be a processor, the transceiver module may be a transceiver or a communication interface, and the storage module may be a memory.

In a fourth aspect, embodiments of the present disclosure provide another communication apparatus, which has some or all of functions of a network device implementing the method described in the second aspect. For example, functions of the communication apparatus may include functions of some or all of the embodiments in the present disclosure, or may include functions of implementing any one of the embodiments in the present disclosure alone. The functions may be implemented by hardware, or by hardware executing corresponding software. The hardware or software includes one or more units or modules corresponding to the above functions.

Optionally, in an embodiment of the present disclosure, a structure of the communication apparatus may include a reception and transmission module and a processing module, and the processing module is configured to support the communication apparatus to execute corresponding functions in the above method. The reception and transmission module is configured to support communication between the communication apparatus and other device. The communication apparatus may further include a storage module, and the storage module is configured to couple with the reception and transmission module and the processing module, and store a computer program and data needed for the communication apparatus.

In a fifth aspect, embodiments of the present disclosure provide a communication apparatus, which includes a processor. When the processor calls a computer program in a memory, the carrier selection or reselection method based on the HARQ attribute described in the first aspect is performed.

In a sixth aspect, embodiments of the present disclosure provide a communication apparatus, which includes a processor. When the processor calls a computer program in a memory, the carrier selection or reselection method based on the HARQ attribute described in the second aspect is performed.

In the seventh aspect, embodiments of the present disclosure provide a communication apparatus, including a processor and a memory, where the memory is configured to store a computer program; the processor is configured to execute the computer program stored in the memory to cause the communication apparatus to perform the carrier selection or reselection method based on the HARQ attribute described in the first aspect.

In an eighth aspect, embodiments of the present disclosure provide a communication apparatus, including a processor and a memory, where the memory is configured to store a computer program; the processor is configured to execute the computer program stored in the memory to cause the communication apparatus to perform the carrier selection or reselection method based on the HARQ attribute described in the second aspect.

In a ninth aspect, embodiments of the present disclosure provide a communication apparatus, including a processor and an interface circuit, where the interface circuit is configured to receive code instructions and transmit them to the processor, and the processor is configured to execute the code instructions to cause the apparatus to perform the carrier selection or reselection method based on the HARQ attribute described in the first aspect.

In the tenth aspect, embodiments of the present disclosure provide a communication apparatus, including a processor and an interface circuit, where the interface circuit is configured to receive code instructions and transmit them to the processor, and the processor is configured to execute the code instructions to cause the apparatus to perform the carrier selection or reselection method based on the HARQ attribute described in the second aspect.

In the eleventh aspect, embodiments of the present disclosure provide a communication system, and the system includes the communication apparatus according to the third aspect and the communication apparatus according to the fourth aspect, or the system includes the communication apparatus according to the fifth aspect and the communication apparatus according to the sixth aspect, or the system includes the communication apparatus according to the seventh aspect and the communication apparatus according to the eighth aspect, or the system includes the communication apparatus according to the ninth aspect and the communication apparatus according to the tenth aspect.

In a twelfth aspect, embodiments of the present disclosure provide a computer readable storage medium, configured to store instructions used by the terminal device described above, and when the instructions are executed, the terminal device is caused to perform the carrier selection or reselection method based on the HARQ attribute described in the first aspect.

In a thirteenth aspect, embodiments of the present disclosure provide a readable storage medium, configured to store instructions used by the network device described above, and when the instructions are executed, the network device is caused to perform the carrier selection or reselection method based on the HARQ attribute described in the second aspect.

In a fourteenth aspect, the present disclosure further provides a computer program product including a computer program, which, when executed on a computer, causes the computer to perform the carrier selection or reselection method based on the HARQ attribute described in the first aspect.

In a fifteenth aspect, the present disclosure further provides a computer program product including a computer program, which, when executed on a computer, causes the computer to perform the carrier selection or reselection method based on the HARQ attribute described in the second aspect.

In the sixteenth aspect, the present disclosure provides a chip system, including at least one processor and an interface, for supporting a terminal device to implement functions involved in the first aspect, such as determining or processing at least one of data or information involved in the above method.

In a feasible design, the chip system further includes a memory, and the memory is configured to store a computer program and data needed by the terminal device. The chip system may be formed by chips, or may include chips and other discrete devices.

In the seventeenth aspect, the present disclosure provides a chip system, including at least one processor and an interface, for supporting a network device to implement functions involved in the second aspect, such as determining or processing at least one of data or information involved in the above method.

In a feasible design, the chip system further includes a memory, and the memory is configured to store a computer program and data needed by the network device. The chip system may be formed by chips, or may include chips and other discrete devices.

In an eighteenth aspect, the present disclosure provides a computer program, which, when executed on a computer, causes the computer to perform the carrier selection or reselection method based on the HARQ attribute described in the first aspect.

In a nineteenth aspect, the present disclosure provides a computer program, which, when executed on a computer, causes the computer to perform the carrier selection or reselection method based on the HARQ attribute described in the second aspect.

In conclusion, the carrier selection or reselection method based on the HARQ attribute, the apparatus, the device, the chip system, the storage medium, the computer program, and the computer program product provided in the embodiments of the present disclosure can achieve the following technical effects.

The carrier selection or reselection is triggered; the hybrid automatic repeat request (HARQ) attribute of the sidelink logical channel with the data to be transmitted is determined, where the HARQ attribute of the sidelink logical channel is configured by the network device; and the first target carrier is selected or reselected based on the HARQ attribute. In this way, by influencing the carrier selection or reselection by the HARQ attribute of the sidelink logical channel with the data to be transmitted, the selected or reselected carrier can effectively support the HARQ attribute of the data to be transmitted.

### BRIEF DESCRIPTION OF THE DRAWINGS

To better clarify technical solutions of embodiments of the present disclosure or the background, drawings used in the embodiments of the present disclosure or the background are described hereinafter.
FIG. 1 is a schematic diagram of an architecture of a communication system according to embodiments of the present disclosure;
FIG. 2 is a flow chart of a carrier selection or reselection method based on an HARQ attribute according to embodiments of the present disclosure;
FIG. 3 is a flow chart of a carrier selection or reselection method based on an HARQ attribute according to embodiments of the present disclosure;
FIG. 4 is a flow chart of another carrier selection or reselection method based on an HARQ attribute according to embodiments of the present disclosure;
FIG. 5 is a flow chart of another carrier selection or reselection method based on an HARQ attribute according to embodiments of the present disclosure;
FIG. 6 is a flow chart of another carrier selection or reselection method based on an HARQ attribute according to embodiments of the present disclosure;
FIG. 7 is a flow chart of another carrier selection or reselection method based on an HARQ attribute according to embodiments of the present disclosure;
FIG. 8 is a schematic structural diagram of a communication apparatus according to embodiments of the present disclosure;
FIG. 9 is a schematic structural diagram of another communication apparatus according to embodiments of the present disclosure; and
FIG. 10 is a schematic structural diagram of a chip according to embodiments of the present disclosure.

### DETAILED DESCRIPTION

Exemplary embodiments will be described in detail hereinafter, examples of which are illustrated in the drawings. When the drawings are referred to in the following description, unless otherwise indicated, same numerals in different drawings represent same or similar elements. The implementations described in the following exemplary embodiments do not represent all implementations consistent with the embodiments of the present disclosure. Rather, they are merely examples of devices and methods consistent with some aspects of the embodiments of the present disclosure as recited in the appended claims.

The terms used in the present disclosure are for the purpose of describing particular embodiments only and are not intended to limit the present disclosure. The singular forms "a" and "the" used in the present disclosure and the appended claims are intended to include the plural forms as well, unless otherwise indicated in the context clearly. It should also be understood that the term "and/or" used herein refers to the fact that any or all feasible combinations of one or more of the associated listed items may be included.

It should be understood that although the terms "first", "second", "third", etc., may be used in the present disclosure to describe various pieces of information, such information should not be limited to these terms. These terms are used only to distinguish pieces of information that are of the same type. For example, without departing from the scope of the present disclosure, first information may also be referred to as second information, and similarly, second information may also be referred to as first information. Depending on the context, for example, the expressions "if" and "on condition that" used herein may be interpreted as "in a case that" or "when" or "in response to determining".

For ease of understanding, terms involved in the present disclosure are first introduced.
1. Carrier aggregation (Carrier Aggregation, CA), which can aggregate several carriers (components carrier, CC) together to increase a transmission bandwidth and improve uplink and downlink transmission rates.
2. Channel busy ratio (Channel Busy Ratio, CBR), which is a parameter that measures occupancy of sub-channels on a frequency band.

In order to better understand a carrier selection or reselection method based on an HARQ attribute according to embodiments of the present disclosure, a communication system to which the embodiments of the present disclosure are applicable is first described hereinafter.

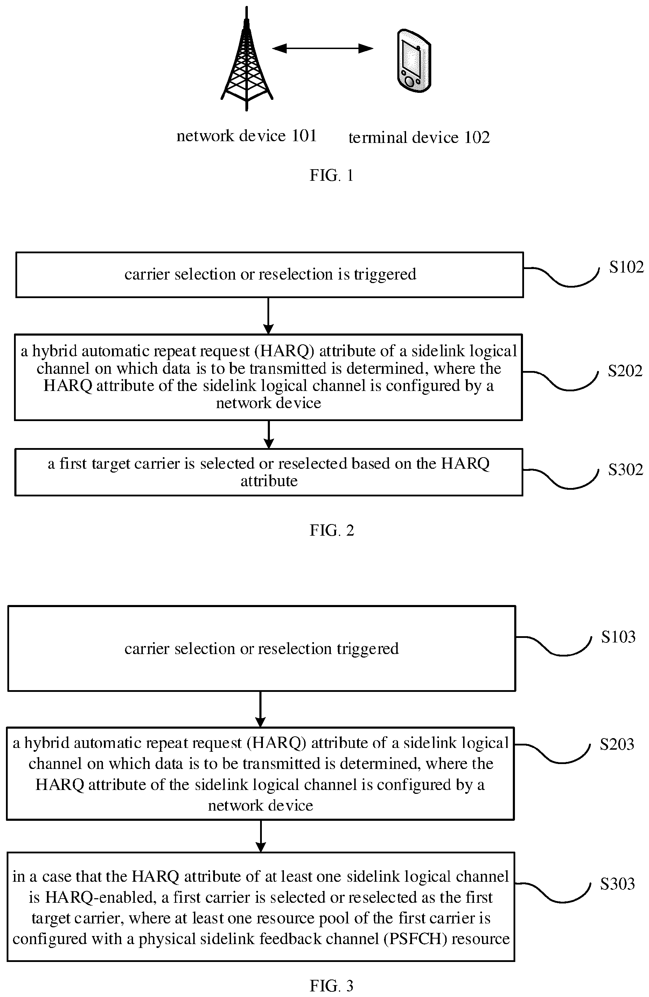

Reference is made to FIG. 1, which is a schematic diagram of an architecture of a communication system according to embodiments of the present disclosure. The communication system may include, but is not limited to, one network device and one terminal device. The quantity and forms of devices shown in FIG. 1 are only for examples and do not constitute a limitation on the embodiments of the present disclosure. In actual applications, two or more than two network devices and two or more than two terminal devices may be included. In FIG. 1, a case where the communication system includes one network device 101 and one terminal device 102 is taken as an example.

It should be noted that the technical solutions of the embodiments of the present disclosure can be applied to various communication systems, such as a long term evolution (Long Term Evolution, LTE) system, a 5th generation (5th Generation, 5G) mobile communication system, a 5G new radio (New Radio, NR) system, or other new mobile communication systems in the future.

The network device 101 in the embodiments of the present disclosure is an entity on a network side for transmitting or receiving signals. For example, the network device 101 may be an evolved NodeB (evolved NodeB, eNB), a transmission reception point (Transmission Reception point, TRP), a next generation NodeB (next generation NodeB, gNB) in an NR system, a base station in other mobile communication systems in the future, or an access node in a wireless fidelity (Wireless Fidelity, WiFi) system, etc. The specific technologies and the specific device form used by the network device are not limited in the embodiments of the present disclosure.

The network device according to the embodiments of the present disclosure may include a central unit (Central Unit, CU) and a distributed unit (Distributed Unit, DU). The CU may also be referred to as a control unit. Protocol layers of the network device, such as a base station, may be separated by using the structure of CU-DU, where functions of some protocol layers are arranged in the CU for centralized control, and functions of some or all of the remaining protocol layers are distributed in the DU, and the CU centrally controls the DU.

The terminal device 102 in the embodiments of the present disclosure is an entity on a user side for receiving or transmitting signals, such as a mobile phone. The terminal device may also be referred to as a terminal (Terminal), a user equipment (User Equipment, UE), a mobile station (Mobile Station, MS), a mobile terminal (Mobile Terminal, MT), etc. The terminal device may be a car with a communication function, a smart car, a mobile phone, a wearable device, a tablet computer (Pad), a computer with a wireless reception and transmission function, a virtual reality (Virtual Reality, VR) terminal device, an augmented reality (Augmented Reality, AR) terminal device, a wireless terminal device in industrial control (industrial control), a wireless terminal device in self-driving (Self-driving), a wireless terminal device in a remote medical surgery (Remote medical surgery), a wireless terminal device in a smart grid (Smart Grid), a wireless terminal device in transportation safety (Transportation Safety), a wireless terminal device in a smart city (Smart City), a wireless terminal device in a smart home (Smart Home), etc.

The specific technologies and the specific device form used by the terminal device are not limited in the embodiments of the present disclosure.

It can be understood that the communication system described in the embodiments of the present disclosure is for more clearly illustrating the technical solutions of the embodiments of the present disclosure, and does not constitute a limitation on the technical solutions provided by the embodiments of the present disclosure. A person skilled in the art can know that, with evolution of the system architecture and emergence of new service scenarios, the technical solutions provided by the embodiments of the present disclosure are also applicable to similar technical problems.

A carrier selection or reselection method based on an HARQ attribute and an apparatus thereof according to the present disclosure are described in detail hereinafter in conjunction with the drawings. FIG. 2 is a flow chart of a carrier selection or reselection method based on an HARQ attribute according to embodiments of the present disclosure, and the method is performed by a terminal device. The carrier selection or reselection method based on the HARQ attribute in this embodiment may be applied to the terminal device, such as a mobile phone, a tablet with mobile communication functions, a smart watch, etc., which is not limited.

As shown in FIG. 2, the method may include but is not limited to the following steps.

S102: carrier selection or reselection is triggered.

For a transmission mode where resources are autonomously selected (for example, the terminal device autonomously selects a resource from a resource pool broadcast by a network), the terminal device (UE) may select or reselect a transmission carrier, for example, selecting or reselecting a carrier from multiple carriers. The selected carrier may be used as a first target carrier, and the first target carrier may be used for, for example, carrier aggregation CA, which is not limited herein.

In an embodiment of the present disclosure, the carrier selection or reselection may refer to cell selection or reselection, i.e., selecting or reselecting among different cells using different carriers.

The hybrid automatic repeat request (HARQ) attribute has an influence on the carrier selection or reselection. In addition, there are other parameters that affect the carrier selection or reselection, such as channel busy ratio (CBR).

The channel busy ratio (CBR) is a parameter that measures occupancy of sub-channels on a frequency band. The terminal device (UE) performs a CBR measurement on a transmission resource pool based on configuration by the network device. The lower the CBR value, the fewer the terminal devices (UE) that are occupying sub-channels of the resource pool to transmit data, and the lower the conflict in selecting the resource pool for data transmission. In the NR Sidelink, one carrier may support multiple transmission resource pools, and the terminal device (UE) may perform CBR measurements on the multiple transmission resource pools respectively.

In these embodiments of the present disclosure, the influence of the HARQ attribute on the carrier selection or reselection is described. The selected or reselected carrier is also a carrier that meets other requirements, which include but not limited to a requirement for a CBR. For example, if it is required that the terminal device can select or reselect a carrier only when a CBR of the carrier is less than or equal to a threshold, then the first target carrier in the embodiments of the present disclosure is at least a carrier that meets the requirement for the CBR, that is, the CBR of the first target carrier is less than or equal to the threshold. In addition, if there are other requirements, the first target carrier in the embodiments of the present disclosure also meets these requirements, which are not enumerated herein. It should be noted that only the influence of the HARQ attribute on the carrier selection and reselection is considered in the present disclosure, and the description of selecting or reselecting the first target carrier based on the HARQ attribute may be as follows.

In an embodiment of the present disclosure, the resource pool described above may be specifically pre-configured by the network device. One carrier may be configured with at least one resource pool, and the resource pool includes resources used for sidelink transmission (such as time-frequency resources) and transmission related parameters, etc. The frequency domain resources in the resource pool may be divided into sub-channels, the size of the sub-channel in the resource pool may be: 10, 15, 20, 25, 50, 75 or 100 physical resource blocks (Physical Resource Block, PRB), etc., and the sub-channel may be a physical channel.

S202: a hybrid automatic repeat request (HARQ) attribute of a sidelink logical channel on which data is to be transmitted is determined, where the HARQ attribute of the sidelink logical channel is configured by a network device.

In these embodiments of the present disclosure, the terminal device (UE) triggers the carrier selection or reselection, and may determine the HARQ attribute of the sidelink logical channel with the data to be transmitted. The HARQ attribute of the sidelink logical channel may be configured by the network device. Then, based on the HARQ attribute of the sidelink logical channel, the carrier is selected or reselected.

The sidelink logical channel (Sidelink Logical Channel, SL-LCH) may include: a sidelink broadcast channel (Sidelink Broadcast Channel, SL-BCH), and/or a sidelink discovery channel (Sidelink Discovery Channel, SL-DCH), and/or a sidelink shared channel (Sidelink Shared Channel, SL-DCH), which is not limited.

S302: a first target carrier is selected or reselected based on the HARQ attribute.

For example, if the quantity of sidelink logical channel with date to be transmitted is at least one, the HARQ attribute configured by the network device for the at least one sidelink logical channel may be determined, and the first target carrier may be selected or reselected based on the HARQ attribute of the at least one sidelink logical channel.

Since the HARQ attribute of the sidelink logical channel with data to be transmitted is taken into consideration during the carrier selection or reselection, the technical problem in the related technologies that a selected or reselected carrier may not support an HARQ attribute of data to be transmitted in a case that a terminal device (UE) performs carrier selection or reselection in the NR sidelink, can be solved.

In these embodiments, the carrier selection or reselection is triggered; the hybrid automatic repeat request (HARQ) attribute of the sidelink logical channel with the data to be transmitted is determined, where the HARQ attribute of the sidelink logical channel is configured by the network device; and the first target carrier is selected or reselected based on the HARQ attribute. In this way, by influencing the carrier selection or reselection by the HARQ attribute of the sidelink logical channel with the data to be transmitted, the selected or reselected carrier can effectively support the HARQ attribute of the data to be transmitted.

FIG. 3 is a flow chart of a carrier selection or reselection method based on an HARQ attribute according to embodiments of the present disclosure, and the method is performed by a terminal device.

As shown in FIG. 3, the method may include but is not limited to the following steps.

S103: carrier selection or reselection triggered.

S203: a hybrid automatic repeat request (HARQ) attribute of a sidelink logical channel on which data is to be transmitted is determined, where the HARQ attribute of the sidelink logical channel is configured by a network device.

For description of S103-S203, reference is made to the above embodiments, which will not be further described herein.

S303: in a case that the HARQ attribute of at least one sidelink logical channel is HARQ-enabled, a first carrier is selected or reselected as the first target carrier, where at least one resource pool of the first carrier is configured with a physical sidelink feedback channel (PSFCH) resource.

HARQ attributes may include HARQ-enabled (HARQ enabled) and HARQ-disabled (HARQ disabled).

In the embodiments of the present disclosures, the terminal device may determine the HARQ attribute configured by the network device for the at least one sidelink logical channel with the data to be transmitted, and select or reselect a carrier as the first target carrier based on the HARQ attribute of the at least one sidelink logical channel.

In the embodiments of the present disclosure, it may be determined whether the HARQ attribute configured for the at least one sidelink logical channel with the data to be transmitted is HARQ-enabled. In a case that the HARQ attribute of the at least one sidelink logical channel is HARQ-enabled, the first carrier is selected or reselected as the first target carrier, where at least one resource pool of the first carrier is configured with a physical sidelink feedback channel (PSFCH) resource.

The resource pool of the first carrier refers to a resource pool configured on an activated bandwidth part (Bandwidth Part, BWP) of the first carrier, and at least one resource pool on the activated BWP of the first carrier is configured with a physical sidelink feedback channel (PSFCH) resource.

For example, the HARQ attribute of at least one sidelink logical channel SL-LCH being HARQ-enabled may be that: an HARQ attribute of one sidelink logical channel SL-LCH among multiple sidelink logical channels SL-LCHs is HARQ-enabled; or, may be that: HARQ attributes of some sidelink logical channels SL-LCHs among multiple sidelink logical channels SL-LCHs are HARQ-enabled; or, may be that: HARQ attributes of all sidelink logical channels SL-LCHs among multiple sidelink logical channels SL-LCHs are HARQ-enabled, which is not limited.

For example, at least one resource pool of the first carrier being configured with a PSFCH resource may be that: one resource pool of the first carrier is configured a PSFCH resource; or, may be that: some resource pools of the first carrier are configured PSFCH resources; or, may be that: all resource pools of the first carrier are configured PSFCH resources, which is not limited.

Embodiments of the present disclosure provide the carrier selection or reselection method based on the HARQ attribute, and the resource pool does not include a resource pool configured specifically for transmitting discovery signals or dedicated to discovery signals, thereby effectively improving practicality of implementations of the method.

Discovery refers to a discovery mechanism between neighboring terminal devices in network coverage scenarios such as Long Term Evolution (Long Term Evolution, LTE). Based on the LTE frame structure, the Sidelink specification adds a discovery channel for mutual discovery between terminal devices. Synchronization between terminal devices can be achieved via a synchronization signal, and the discovery signal is used to implement the discovery mechanism.

For example, the terminal device triggers the carrier selection or reselection, the terminal device determines that the HARQ attribute of at least one sidelink logical channel SL-LCH with data to be transmitted is HARQ-enabled (HARQ enabled), and at least one resource pool of the first carrier selected or reselected by the terminal device is configured with a PSFCH resource. The first carrier selected or reselected is also a carrier that meets other requirements, which include but not limited to a requirement for a CBR. For example, if it is required that the terminal device can select or reselect a carrier only when a CBR of the carrier is less than or equal to a threshold, then the CBR of the first carrier selected or reselected by the terminal device is less than or equal to the CBR threshold, that is, the selected or reselected first carrier meets the requirement for the CBR. Further, at least one resource pool of the selected or reselected first carrier is configured with a PSFCH resource. In addition, if there are other requirements, the first carrier selected or reselected by the terminal device also meets these requirements, which are not enumerated herein.

In these embodiments, the carrier selection or reselection is triggered; the HARQ attribute of the sidelink logical channel with the data to be transmitted is determined; and in a case that the HARQ attribute of at least one sidelink logical channel is HARQ-enabled, the first carrier is selected or reselected as the first target carrier, where the at least one resource pool of the first carrier is configured with the PSFCH resource. In this way, in a case that the HARQ attribute of the at least one sidelink logical channel is HARQ-enabled, the selected or reselected carrier can effectively support the HARQ attribute of the data to be transmitted, which improves the transmission success rate and the transmission effect of the data to be transmitted.

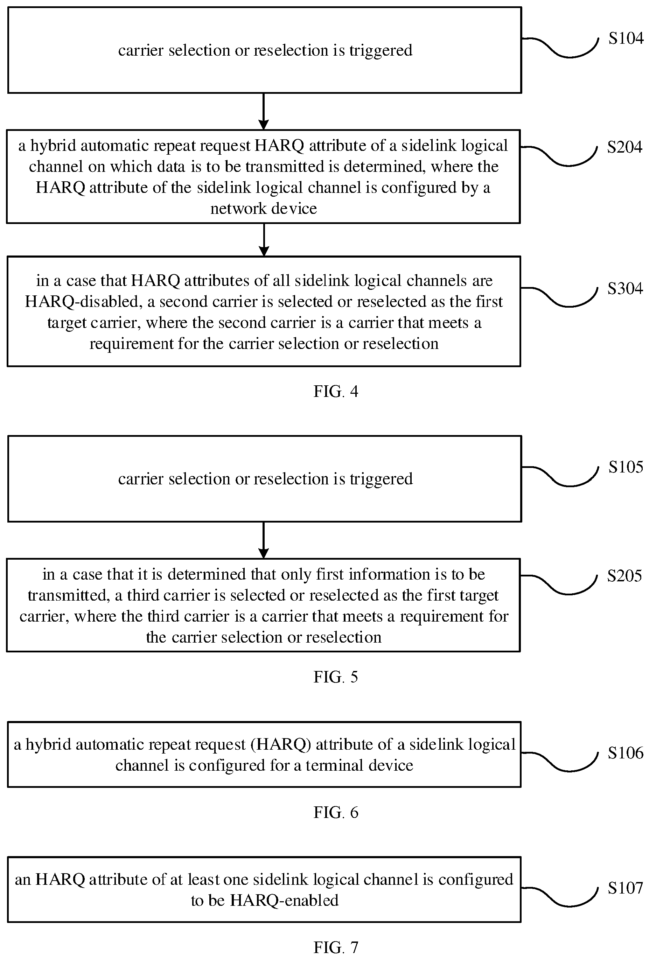

FIG. 4 is a flow chart of another carrier selection or reselection method based on an HARQ attribute according to embodiments of the present disclosure, and the method is performed by a terminal device.

As shown in FIG. 4, the method may include but is not limited to the following steps.

S104: carrier selection or reselection is triggered.

S204: a hybrid automatic repeat request HARQ attribute of a sidelink logical channel on which data is to be transmitted is determined, where the HARQ attribute of the sidelink logical channel is configured by a network device.

For description of S104-S204, reference is made to the above embodiments, which will not be further described herein.

S304: in a case that HARQ attributes of all sidelink logical channels are HARQ-disabled, a second carrier is selected or reselected as the first target carrier, where the second carrier is a carrier that meets a requirement for the carrier selection or reselection.

Embodiments of the present disclosure provide the carrier selection or reselection method based on the HARQ attribute, and the resource pool does not include a resource pool configured specifically for transmitting discovery signals or dedicated to discovery signals, thereby effectively improving practicality of implementations of the method.

For example, the terminal device triggers the carrier selection or reselection, the terminal device determines that HARQ attributes of all sidelink logical channels SL-LCHs are HARQ-disabled, and the terminal device may select or reselect any carrier that meets the requirement for the carrier selection or reselection as the first target carrier.

For example, the any carrier selected or reselected by the terminal device that meets the requirement for the carrier selection or reselection needs to meet other carrier selection or reselection requirements. The carrier selection or reselection requirements include but not limited to a requirement for a channel busy ratio (channel busy ratio, CBR).

In these embodiments, the "any" described in the above refers to any carrier that meets other requirements, and the other requirements may include, for example, a requirement for a CBR. The other requirements include but not limited to the requirement for the CBR. For the other requirements, reference may be made to S303, which is not further described herein. For the HARQ attribute, "any" indicates that there is no requirement on whether at least one resource pool on the carrier is configured with a PSFCH resource, that is, the at least one resource pool on "any carrier" may be configured with a PSFCH resource, or all resource pools on "any carrier" may not be configured with PSFCH resources, which is not limited.

For example, in a case that the HARQ attributes of all sidelink logical channels SL-LCHs are HARQ-disabled, the second carrier selected or reselected by the terminal device is also a carrier that meets other requirements, which includes but not limited to a requirement for a CBR. For example, if it is required that the terminal device can select or reselect a carrier only when a CBR of the carrier is less than or equal to a threshold, then the CBR of the second carrier selected or reselected by the terminal device is less than or equal to the CBR threshold, that is, the selected or reselected second carrier meets the requirement for the CBR. In addition, if there are other requirements, the second carrier selected or reselected by the terminal device also meets these requirements, which are not enumerated herein. In addition, there is no requirement on whether the at least one resource pool of the selected or reselected second carrier is configured with a PSFCH resource, which is not limited.

In these embodiments, the carrier selection or reselection is triggered; the HARQ attribute of the sidelink logical channel with the data to be transmitted is determined; and in a case that the HARQ attributes of all sidelink logical channels are HARQ-disabled, the second carrier is selected or reselected as the first target carrier, where the second carrier is any carrier that meets the requirement for the carrier selection or reselection. In this way, in a case that the HARQ attributes of all sidelink logical channels are HARQ-disabled, the carrier that meets the requirement for the carrier selection or reselection can be used as the selected first target carrier, which effectively improves applicability of the carrier selection or reselection method and ensures efficiency of the carrier selection or reselection.

FIG. 5 is a flow chart of another carrier selection or reselection method based on an HARQ attribute according to embodiments of the present disclosure, and the method is performed by a terminal device.

As shown in FIG. 5, the method may include but is not limited to the following steps.

S105: carrier selection or reselection is triggered.

S205: in a case that it is determined that only first information is to be transmitted, a third carrier is selected or reselected as the first target carrier, where the third carrier is a carrier that meets a requirement for the carrier selection or reselection.

That is, the terminal device triggers the carrier selection or reselection, and in a case that it is determined that only the first information is to be transmitted, any carrier that meets the requirement for the carrier selection or reselection (the selected one may be referred to as the third carrier) can be selected or reselected as the first target carrier.

In some embodiments of the present disclosure, the first information includes at least one of the following: a sidelink channel state information (Channel State Information, CSI) SL CSI report; and/or a sidelink inter-UE coordination (Inter-UE Coordination, IUC) SL IUC report; and/or a sidelink discontinuous reception (Discontinuous Reception, DRX) SL DRX command, so that the carrier selection or reselection method can be effectively applicable to a variety of different types of first information, thereby improving the scope of application of the carrier selection or reselection method.

For example, the terminal device triggers the carrier selection or reselection, and in a case that it is determined that only the SL CSI report and/or the SL IUC report and/or the SL DRX command are to be transmitted, the terminal device may select or reselect any carrier (which may be referred to as the third carrier) as the first target carrier.

In these embodiments, the "any" described in the above refers to any carrier that meets other requirements, and the other requirements may include, for example, a requirement for a CBR. The other requirements include but not limited to the requirement for the CBR. For the other requirements, reference may be made to S303, which is not further described herein. For the HARQ attribute, "any" indicates that there is no requirement on whether at least one resource pool on the carrier is configured with a PSFCH resource, that is, the at least one resource pool on "any carrier" may be configured with a PSFCH resource, or all resource pools on "any carrier" may not be configured with PSFCH resources, which is not limited.

For example, the terminal device triggers the carrier selection or reselection, and in a case that it is determined that only the SL CSI report and/or the SL IUC report and/or the SL DRX command are to be transmitted, the third carrier selected or reselected by the terminal device is also a carrier that meets other requirements, which include but not limited to a requirement for a CBR. For example, if it is required that the terminal device can select or reselect a carrier only when a CBR of the carrier is less than or equal to a threshold, a CBR of the third carrier selected or reselected by the terminal device is less than or equal to the CBR threshold, that is, the selected or reselected third carrier meets the requirement for the CBR. In addition, if there are other requirements, the third carrier selected or reselected by the terminal device also meets these requirements, which are not enumerated herein. In addition, there is no requirement on whether at least one resource pool of the selected or reselected third carrier is configured with a PSFCH resource, which is not limited.

In these embodiments, the carrier selection or reselection is triggered; and in a case that it is determined that only the first information is to be transmitted, the third carrier is selected or reselected as the first target carrier, where the third carrier is any carrier that meets the requirement for the carrier selection or reselection. In this way, in a case that it is determined that only the first information is to be transmitted, the third carrier can be selected or reselected as the first target carrier, where the third carrier is any carrier that meets the requirement for the carrier selection or reselection, which effectively improves applicability of the carrier selection or reselection method and ensures efficiency and effect of the carrier selection or reselection.

FIG. 6 is a flow chart of another method for carrier selection or reselection based on an HARQ attribute according to embodiments of the present disclosure, and the method is performed by a network device.

As shown in FIG. 6, the method may include but is not limited to the following step.

S106: a hybrid automatic repeat request (HARQ) attribute of a sidelink logical channel is configured for a terminal device.

In these embodiments of the present disclosure, the network device may configure the HARQ attribute of the sidelink logical channel SL-LCH for the terminal device.

For example, an HARQ attribute may be configured for each sidelink logical channel SL-LCH, which is not limited.

In these embodiments, the hybrid automatic repeat request (HARQ) attribute of the sidelink logical channel is configured for the terminal device, which can effectively support the terminal device to select or reselect a carrier.

FIG. 7 is a flow chart of another method for carrier selection or reselection based on an HARQ attribute according to embodiments of the present disclosure, and the method is performed by a network device.

As shown in FIG. 7, the method may include but is not limited to the following step.

S107: an HARQ attribute of at least one sidelink logical channel is configured to be HARQ-enabled.

That is, the network device may configure the HARQ attribute of the sidelink logical channel SL-LCH for the terminal device. In a case that there are multiple sidelink logical channels SL-LCHs, an HARQ attribute of at least one sidelink logical channel SL-LCH among the multiple sidelink logical channels SL-LCHs may be configured as HARQ-enabled.

In these embodiments, by configuring the HARQ attribute of the at least one sidelink logical channel SL-LCH to be HARQ-enabled, it is effectively supported that the terminal device selects or reselects a carrier, and configuration flexibility of the HARQ attribute is improved.

In the carrier selection or reselection method based on the HARQ attribute according to the embodiments of the present disclosure, in a case that the HARQ attribute of the at least one sidelink logical channel is configured as HARQ-enabled, a PSFCH resource may be configured for at least one resource pool of at least one carrier.

In the carrier selection or reselection method based on the HARQ attribute according to the embodiments of the present disclosure, in a case that the HARQ attribute of the at least one sidelink logical channel is configured as HARQ-enabled, PSFCH resources may be configured for all resource pools of all carriers.

In the carrier selection or reselection method based on the HARQ attribute according to the embodiments of the present disclosure, in a case that the HARQ attribute of the at least one sidelink logical channel is configured as HARQ-enabled, a PSFCH resource may be configured for at least one resource pool of each carrier in all carriers.

In the carrier selection or reselection method based on the HARQ attribute according to the embodiments of the present disclosure, in a case that the HARQ attribute of the at least one sidelink logical channel is configured as HARQ-enabled, PSFCH resources may be configured for all resource pools of at least one carrier.

Therefore, in these embodiments of the present disclosure, the network device can configure PSFCH resource(s) for resource pool(s) of carrier(s) based on any of the above methods, which effectively improves flexibility of PSFCH resource configuration of the resource pool(s) on the carrier(s), and facilitates the terminal device to flexibly select or reselect the carrier based on the PSFCH resource configuration of the resource pool(s) on the carrier(s).

The embodiments of the present disclosure provide the carrier selection or reselection method based on the HARQ attribute, and the resource pool does not include a resource pool configured specifically for transmitting send discovery signals or dedicated to discovery signals, which effectively improves practicality of implementations of the method.

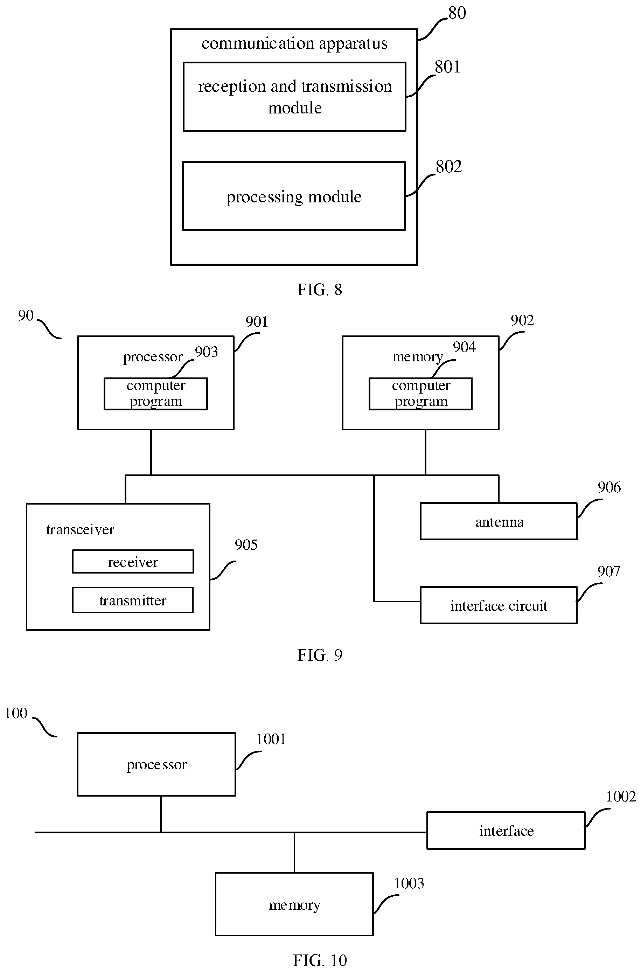

FIG. 8 is a schematic structural diagram of a communication apparatus provided in embodiments of the present disclosure. The communication apparatus 80 shown in FIG. 8 may include a reception and transmission module 801 and a processing module 802. The reception and transmission module 801 may include a transmission module and/or a reception module. The transmission module is configured to implement a transmission function, and the reception module is used to implement a reception function. The reception and transmission module 801 may implement a transmission function and/or a reception function.

The communication apparatus 80 may be a terminal device (such as the terminal device in the above method embodiments), or a device in a terminal device, or a device that may be used in conjunction with a terminal device. Or, the communication apparatus 80 may be a network device (such as the network device in the above method embodiments), or a device in a network device, or a device that may be used in conjunction with a network device.

The communication apparatus 80, on the terminal device side, includes a processing module 802.

The processing module 802 is configured to trigger carrier selection or reselection; to determine a hybrid automatic repeat request (HARQ) attribute of a sidelink logical channel on which data is to be transmitted, where the HARQ attribute of the sidelink logical channel is configured by a network device; and to select or reselect a first target carrier based on the HARQ attribute.

Optionally, the processing module 802 being configured to select or reselect the first target carrier based on the HARQ attribute includes:
in a case that the HARQ attribute of at least one sidelink logical channel is HARQ-enabled, to select or reselect a first carrier as the first target carrier;
where at least one resource pool of the first carrier is configured with a physical sidelink feedback channel (PSFCH) resource.

Optionally, the at least one resource pool does not include a resource pool configured specifically for transmitting discovery signals or dedicated to discovery signals.

Optionally, the processing module 802 being configured to select or reselect the first target carrier based on the HARQ attribute includes:
in a case that HARQ attributes of all sidelink logical channels are HARQ-disabled, to select or reselect a second carrier as the first target carrier;
where the second carrier is a carrier that meets a requirement for the carrier selection or reselection.

Optionally, the processing module 802 is further configured to:
in a case that it is determined that only first information is to be transmitted, select or reselect a third carrier as the first target carrier;
where the third carrier is a carrier that meets a requirement for the carrier selection or reselection.

Optionally, the first information includes at least one of:
a sidelink channel state information (SL CSI) report; and/or
a sidelink inter-UE coordination (SL IUC) report; and/or
a sidelink discontinuous reception (SL DRX) command.

According to the embodiments of the present disclosure, the terminal device may trigger the carrier selection or reselection; determine the hybrid automatic repeat request (HARQ) attribute of the sidelink logical channel with the data to be transmitted, where the HARQ attribute of the sidelink logical channel is configured by the network device; and select or reselect the first target carrier based on the HARQ attribute. In this way, by influencing the carrier selection or reselection by the HARQ attribute of the sidelink logical channel with the data to be transmitted, the selected or reselected carrier can effectively support the HARQ attribute of the data to be transmitted.

The communication apparatus 80, on the network device side, includes a processing module 802.

The processing module 802 is configured to configure a hybrid automatic repeat request (HARQ) attribute of a sidelink logical channel for a terminal device.

Optionally, the processing module 802 being configured to configure the HARQ attribute of the sidelink logical channel for the terminal device includes:
to configure the HARQ attribute of at least one sidelink logical channel to be HARQ-enabled.

Optionally, the processing module 802 is further configured to:
in a case that the HARQ attribute of the at least one sidelink logical channel is configured as HARQ-enabled, to configure a PSFCH resource for at least one resource pool of at least one carrier.

Optionally, the processing module 802 is further configured to:
in a case that the HARQ attribute of the at least one sidelink logical channel is configured as HARQ-enabled, to configure PSFCH resources for all resource pools of all carriers.

Optionally, the processing module 802 is further configured to:
in a case that the HARQ attribute of the at least one sidelink logical channel is configured as HARQ-enabled, to configure a PSFCH resource for at least one resource pool of each carrier in all carriers.

Optionally, the processing module 802 is further configured to:
in a case that the HARQ attribute of the at least one sidelink logical channel is configured as HARQ-enabled, to configure PSFCH resources for all resource pools of at least one carrier.

Optionally, the resource pool does not include a resource pool configured specifically for transmitting discovery signals or dedicated to discovery signals.

According to embodiments of the present disclosure, the network device configures the hybrid automatic repeat request (HARQ) attribute of the sidelink logical channel for the terminal device, which can effectively support the terminal device to select or reselect a carrier.

FIG. 9 is a structural diagram of a communication apparatus 90 according to embodiments of the present disclosure. The communication apparatus 90 may be a terminal device (such as the terminal device in the above method embodiments), or a network device (such as the network device in the above method embodiments), or a chip, chip system, or processor that supports the terminal device to implement the above method, or a chip, chip system, or processor that supports the network device to implement the above method. The apparatus may be configured to implement the method described in the above method embodiments. For details, reference may made to the description in the above method embodiments.

The communication apparatus 90 may include one or more processors 901. The processor 901 may be a general-purpose processor or a special-purpose processor, or the like. For example, the processor may be a baseband processor or a central processing unit. The baseband processor may be configured to process communication protocols and communication data. The central processing unit may be configured to control the communication apparatus (such as a base station, a baseband chip, a terminal device, a terminal device chip, a DU or a CU, etc.), execute a computer program, and process data for the computer program.

Optionally, the communication apparatus 90 may further include one or more memories 902, on which a computer program 904 may be stored, and the processor 901 may store a computer program 903. The processor 901 executes the computer program 904 and/or the computer program 903 to cause the communication apparatus 90 to perform the method described in the above method embodiments.

Optionally, the memory 902 may further store data. The communication apparatus 90 and the memory 902 may be arranged separately or integrated together.

Optionally, the communication apparatus 90 may further include a transceiver 905 and an antenna 906. The transceiver 905 may be referred to as a reception and transmission unit, a transceiver unit, a reception and transmission circuit, etc., and is configured to implement reception and transmission functions. The transceiver 905 may include a receiver and a transmitter. The receiver may be called a receiver unit or a reception circuit, etc., configured to implement the reception function; the transmitter may be referred to as a transmitter unit, a transmission circuit, etc., configured to implement the transmission function.

Optionally, the communication apparatus 90 may further include one or more interface circuits 907. The interface circuit 907 is configured to receive code instructions and transmit them to the processor 901. The processor 901executes the code instructions to cause the communication apparatus 90 to perform the method described in the above method embodiments.

In an implementation, the processor 901 may include a transceiver for implementing reception and transmission functions. For example, the transceiver may be a reception and transmission circuit, an interface, or an interface circuit. The reception and transmission circuit, the interface or the interface circuit configured to implement the reception and transmission functions may be separated or integrated together. The above reception and transmission circuit, interface or interface circuit may be configured for reading and writing codes/data, or the above reception and transmission circuit, interface or interface circuit may be configured for signal transmission or transfer.

In an implementation, the processor 901 may store a computer program 903, and the computer program 903 is executed on the processor 901, to cause the communication apparatus 90 to perform the method described in the above method embodiments. The computer program 903 may be embedded in the processor 901, and in this case, the processor 901 may be implemented by hardware.

In an implementation, the communication apparatus 90 may include a circuit, and the circuit may implement functions of reception or transmission or communication in the above method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be a terminal device (such as the terminal device in the above method embodiments) or a network device (such as the network device in the above method embodiments), but the scope of the communication apparatus described in the present disclosure is not limited thereto, and the structure of the communication apparatus may not be limited to FIG. 9. The communication apparatus may be a stand-alone device or may be part of a larger device. For example, the communication apparatus may be:
(1) an independent integrated circuit (IC), or chip, or chip system or subsystem;
(2) a collection of one or more ICs, where, optionally, the IC collection may include a storage component for storing data and computer programs;
(3) ASIC, such as modem;
(4) a module that can be embedded into other devices;
(5) a receiver, terminal device, intelligent terminal device, a cellular phone, a wireless equipment, a handheld device, a mobile unit, a vehicle-mounted device, a network device, a cloud device, an artificial intelligence device, etc.;
(6) others, etc.

For a case where the communication apparatus may be a chip or a chip system, reference may be made to FIG. 10, which is a structural diagram of a chip. The chip shown in FIG. 10 includes a processor 1001 and an interface 1002. The quantity of processors 1001 may be one or more, and the quantity of interfaces 1002 may be multiple.

For a case where the chip is configured to implement the functions of the terminal device in the embodiments of the present disclosure:
the processor 1001 is configured to implement S102, S202, S302, etc. in FIG. 2; S103, S203, S303, etc. in FIG. 3; S104, S204, S304, etc. in FIG.4; and S105, S205, etc. in FIG.5.

For a case where the chip is configured to implement the functions of the network device in the embodiments of the present disclosure:
the processor 1001 is configured to implement S106 in FIG. 6 and S107 in FIG. 7.

Optionally, the chip further includes a memory 1003, and the memory 1003 is configured to store needed computer programs and data.

Those skilled in the art can also understand that various illustrative logical blocks and steps listed in the embodiments of the present disclosure can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present disclosure.

The embodiments of the present disclosure also provide a communication system, which includes the communication apparatus serving as a terminal device (such as the terminal device in above method embodiments) and the communication apparatus serving as a network device (such as the network device in the above method embodiments) in the embodiments of FIG. 8, or the system includes the communication apparatus serving as a terminal device (such as the terminal device in above method embodiments) and the communication apparatus serving as a network device (such as the network device in above method embodiments) in the embodiments of FIG. 9.

The present disclosure further provides a readable storage medium, on which instructions are stored. When the instructions are executed by a computer, functions of any of the above method embodiments are implemented.

The present disclosure further provides a computer program product. The computer program product is executed by a computer to implement functions of any of the above method embodiments.

The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present disclosure are generated in whole or in part. The computer may be a general-purpose computer, a special-purpose computer, a computer network, or other programmable device. The computer program may be stored in a computer readable storage medium or transferred from a computer readable storage medium to another computer readable storage medium. For example, the computer program may be transferred from a website, computer, server, or data center to another website, computer, server or data center through wired means (such as coaxial cable, optical fiber, digital subscriber line (DSL)) or wireless means (such as infrared, radio, microwave, etc.). The computer readable storage medium may be any available medium that can be accessed by a computer, or a data storage device integrated by one or more available media, which includes a server, a data center, and so on. The available medium may be a magnetic medium (e.g., floppy disk, hard disk, magnetic tape), optical medium (e.g., high-density digital video disc (DVD)), or semiconductor medium (e.g., solid state disk (SSD)) etc.

Those of ordinary skill in the art may appreciate that the first, second, and other numerical numbers involved in the present disclosure are only for convenience of description and are not used to limit the scope of the embodiments of the present disclosure, or to indicate the order.

At least one in the present disclosure may also be described as one or more, and multiple may be two, three, four or more, which are not limited by the present disclosure. In the embodiments of the present disclosure, technical features are distinguished by terms "first", "second", "third", "A", "B", "C" and "D", etc. The technical features described by the terms "first", "second", "third", "A", "B", "C" and "D" are not in an order of precedence or in an order of size.

The corresponding relationships shown in each table in the present disclosure can be configured or predefined. The values of the information in each table are only examples and can be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments can be made based on the above table, such as splitting, merging, etc. The names of the parameters shown in the titles of the above tables may also be other names understandable by the communication apparatus, and the values or expressions of the parameters may also be other values or expressions understandable by the communication apparatus. When implementing the above tables, other data structures can also be used, such as array, queue, container, stack, linear list, pointer, linked list, tree, graph, structure, class, heap, distributed table or hash table.

The term "predefined" in the present disclosure may be understood as defined, pre-defined, stored, pre-stored, pre-negotiated, pre-configured, solidified, or pre-burnt.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Those of ordinary skill in the art may implement the described functions using different methods for each specific application, but such implementations should not be considered as exceeding the scope of the present disclosure.

Those of ordinary skill in the art can clearly understand that for the convenience and simplicity of description, reference may be made to the corresponding processes in the above method embodiments for the specific operating processes of the systems, devices and units described above, which will not be further described herein.

The above descriptions are only specific embodiments of the present disclosure, but the protection scope of the present disclosure is not limited thereto. Any technician familiar with the technical field can easily think of changes or substitutions within the technical scope of in the present disclosure, all of which shall fall within the protection scope of the present disclosure. Therefore, the protection scope of the present disclosure is defined by the protection scope of the claims.

## Claims

1. A carrier selection or reselection method based on a HARQ attribute, performed by a terminal device, comprising:
triggering carrier selection or reselection;
determining a hybrid automatic repeat request (HARQ) attribute of a sidelink logical channel on which data is to be transmitted, wherein the HARQ attribute of the sidelink logical channel is configured by a network device; and
selecting or reselecting a first target carrier based on the HARQ attribute.

2. The carrier selection or reselection method according to claim 1, wherein selecting or reselecting the first target carrier based on the HARQ attribute comprises:
in a case that the HARQ attribute of at least one sidelink logical channel is HARQ-enabled, selecting or reselecting a first carrier as the first target carrier;
wherein at least one resource pool of the first carrier is configured with a physical sidelink feedback channel (PSFCH) resource.

3. The carrier selection or reselection method according to claim 2, wherein the at least one resource pool does not comprise a resource pool configured specifically for transmitting discovery signals or dedicated to discovery signals.

4. The carrier selection or reselection method according to claim 1, wherein selecting or reselecting the first target carrier based on the HARQ attribute comprises:
in a case that HARQ attributes of all sidelink logical channels are HARQ-disabled, selecting or reselecting a second carrier as the first target carrier;
wherein the second carrier is a carrier that meets a requirement for the carrier selection or reselection.

5. The carrier selection or reselection method according to claim 1, further comprising:
in a case that it is determined that only first information is to be transmitted, selecting or reselecting a third carrier as the first target carrier;
wherein the third carrier is a carrier that meets a requirement for the carrier selection or reselection.

6. The carrier selection or reselection method according to claim 5, wherein the first information comprises at least one of:
a sidelink channel state information (SL CSI) report; and/or
a sidelink inter-UE coordination (SL IUC) report; and/or
a sidelink discontinuous reception (SL DRX) command.

7. A carrier selection or reselection method based on a HARQ attribute, performed by a network device, comprising:
configuring a hybrid automatic repeat request (HARQ) attribute of a sidelink logical channel for a terminal device.

8. The carrier selection or reselection method according to claim 7, wherein configuring the HARQ attribute of the sidelink logical channel for the terminal device comprises:
configuring the HARQ attribute of at least one sidelink logical channel to be HARQ-enabled.

9. The carrier selection or reselection method according to claim 8, further comprising:
in a case that the HARQ attribute of the at least one sidelink logical channel is configured as HARQ-enabled, configuring a PSFCH resource for at least one resource pool of at least one carrier.

10. The carrier selection or reselection method according to claim 8, further comprising:
in a case that the HARQ attribute of the at least one sidelink logical channel is configured as HARQ-enabled, configuring PSFCH resources for all resource pools of all carriers.

11. The carrier selection or reselection method according to claim 8, further comprising:
in a case that the HARQ attribute of the at least one sidelink logical channel is configured as HARQ-enabled, configuring a PSFCH resource for at least one resource pool of each carrier in all carriers.

12. The carrier selection or reselection method according to claim 8, further comprising:
in a case that the HARQ attribute of the at least one sidelink logical channel is configured as HARQ-enabled, configuring PSFCH resources for all resource pools of at least one carrier.

13. The carrier selection or reselection method according to any one of claims 9 to 12, wherein the resource pool does not comprise a resource pool configured specifically for transmitting discovery signals or dedicated to discovery signals.

14. A communication apparatus, comprising:
a processing module, configured to trigger carrier selection or reselection; to determine a hybrid automatic repeat request (HARQ) attribute of a sidelink logical channel on which data is to be transmitted, wherein the HARQ attribute of the sidelink logical channel is configured by a network device; and to select or reselect a first target carrier based on the HARQ attribute.

15. A communication apparatus, comprising:
a processing module, configured to configure a hybrid automatic repeat request (HARQ) attribute of a sidelink logical channel for a terminal device.

16. A communication system, comprising a terminal device and a network device, wherein the terminal device is configured to perform the carrier selection or reselection method according to any one of claims 1 to 6, and the network device is configured to perform the carrier selection or reselection method according to any one of claims 7 to 13.

17. A computer readable storage medium, configured to store instructions, wherein when the instructions are executed, the carrier selection or reselection method according to any one of claims 1 to 13 is performed.
